# EUROPÄISCHE PATENTSCHRIFT

(11) **EP 1 724 132 B1**
(45) Veröffentlichungstag und Bekanntmachung des Hinweises auf die Patenterteilung: **03.10.2007**
(21) Anmeldenummer: 06005456.6
(22) Anmeldetag: 17.03.2006
(51) Int. Cl.: B60G 21/05, B60G 7/00, B62D 21/09

(54) **Achskomponente**
Axle components
Composants d'essieu

(30) Priorität: 18.05.2005 DE 102005023604
(43) Veröffentlichungstag der Anmeldung: 22.11.2006
(73) Patentinhaber: Benteler Automobiltechnik GmbH, 33104 Paderborn (DE)
(72) Erfinder: Zuber, Armin, 74909 Meckesheim (DE)
(74) Vertreter: Ksoll, Peter

(56) Entgegenhaltungen:
- EP-A- 0 760 265
- EP-A- 0 960 753
- EP-A- 1 205 319
- WO-A-20/05118345
- DE-C1- 3 412 578
- US-A- 5 290 079
- US-B1- 6 516 913
- PATENT ABSTRACTS OF JAPAN Bd. 1995, Nr. 08, 29. September 1995 (1995-09-29) -& JP 07 125651 A (NISSAN MOTOR CO LTD), 16. Mai 1995 (1995-05-16)

## Beschreibung

Die Erfindung betrifft eine Achskomponente für ein Kraftfahrzeug, bestehend aus mehreren miteinander verbundenen Metallbauteilen.

Achskomponenten, beispielsweise Verbundlenkerachsen und insbesondere deren Längslenker und Querträger, die Querlenker von McPherson- oder Mehrlenkerachsen sowie Hilfsrahmen, unterliegen im Betrieb hohen statischen und dynamischen Belastungen. Die verschiedenen Achskomponenten werden daher teilweise überdimensioniert, weil die Wanddicke der Bauteile nach der höchsten Belastung ausgelegt wird. Aus diesen Gründen werden sogenannte Tailored Blanks oder Tailored Tubes verbaut. Die hieraus gefertigten Karosserie- oder Fahrwerksbauteile sind dann in unterschiedlichen Bauteilzonen hinsichtlich ihrer Dicke auf die im Fahrbetrieb auftretenden Belastungen bzw. Spannungen unter Einhaltung notwendiger Sicherheitsfaktoren abgestimmt.

Es ist ferner bekannt, Achskomponenten mit einer inneren partiellen Ausschäumung zu versehen, beispielsweise durch die EP 0 960 753 A2. Hierdurch soll eine gezielte Verstärkung in den Übergangsabschnitten zwischen einem Querträger und den Längslenkern einer Verbundlenkerachser erreicht werden.

Des Weiteren kann zur Erhöhung der Dauerfestigkeit von Achskomponenten ein Kugelstrahlen der gefährdeten Bereiche durchgeführt werden, um Druckeigenspannungen an der Bauteiloberfläche einzubringen. Allerdings sind Druckeigenspannungen nur schwer messbar und eine Qualitätsüberwachung schwierig. Auch ist diese Vorgehensweise kostenintensiv.

Grundsätzlich ist auch der Einsatz eines Metallgewebes als Verstärkung von Kraftfahrzeugkomponenten bekannt. Die US-A-5,290,079 beschreibt in diesem Zusammenhang einen Stoßfänger für ein Kraftfahrzeug mit einem quer zu den Längsträgern des Kraftfahrzeugrahmens festlegbaren Querträger. Der Querträger besteht aus einem gieß- bzw. spritzgussfähigen verstärkten Kunststoff aus einem Kunstharz. In der Kunstharzmatrix ist eine Faserverstärkung aus Glasfasern eingebettet. Des Weiteren weist der Querträger ein Verstärkungsnetz aus einem duktilen Metall auf.

Der Erfindung liegt ausgehend vom Stand der Technik die Aufgabe zugrunde, eine hoch belastbare Achskomponente zu schaffen, welche im Dauerfestigkeitsverhalten verbessert ist und eine höhere Lebensdauer erreicht.

Die Lösung dieser Aufgabe besteht nach der Erfindung in einer Achskomponente mit den Merkmalen von Anspruch 1.

Kernpunkt der Erfindung bildet die Maßnahme, bei einer aus mehreren Metallbauteilen bestehenden Achskomponente zumindest ein Metallbauteil mit einer partiellen Verstärkung aus einem Metallgewebe zu versehen. Durch das Metallgewebe kann eine gezielte Verstärkung bzw. Versteifung in kritischen Bereichen der Achskomponente erzielt werden, beispielsweise in Beul- oder Knickbereichen oder in rissgefährdeten Bereichen der Achskomponente. Auf diese Weise ist eine vorteilhafte Abstimmung der Festigkeit und Steifigkeit in verschiedenen Bauteilzonen auf die hier zu erwartenden Belastungen möglich. Dementsprechend kann die Dauerfestigkeit der Achskomponente erhöht und die Lebensdauer der Achskomponente gesteigert werden.

Vorteilhafte Ausgestaltungen des grundsätzlichen Erfindungsgedankens sind Gegenstand der abhängigen Ansprüche 2 bis 7.

Vorzugsweise ist das Metallgewebe auf das Metallbauteil vollflächig geklebt. Hierbei kann eine Fixierung des Metallgewebes auf dem Metallbauteil mittels Punktschweißen erfolgen. In diesem Falle spricht man von einem Punktschweißkleben.

Das Metallgewebe kann aus Stahldraht, verzinktem Stahldraht bzw. rostfreiem Stahldraht oder Edelstahl bestehen mit hoher Festigkeit. Das Metallbauteil ist vorzugsweise als Hohlprofil ausgelegt. Hierbei kann die partielle Verstärkung sowohl innen als auch außen oder beidseitig am Metallbauteil vorgenommen werden. Die Steifigkeit des Metallgewebes, insbesondere die Drahtdicke und die Maschenweite, wird je nach Anwendungsfall aufgrund der gekrümmten Oberflächen angepasst. Als für die Praxis gut geeignet wird ein Metallgeflecht aus einem Draht mit einer Dicke zwischen 0,09 mm und 1,2 mm sowie einer Maschenweite zwischen 0,14 mm und 5,15 mm angesehen.

Im Rahmen der Erfindung ist insbesondere daran gedacht, eine Achskomponente in Form einer Verbundlenkerachse und hier insbesondere den Querträger oder den Querlenker einer McPherson-Achse bzw. einer Mehrlenkerachse mit einer partiellen Verstärkung aus einem Metallgewebe zu versehen. Auch können Metallbauteile des Hilfsrahmens mit einer partiellen Verstärkung aus aufgeklebtem Metallgewebe in gefährdeten Bereichen versehen werden.

Besonders vorteilhaft wirkt sich aus, dass eine gezielte Verstärkung der Achskomponenten in gefährdeten Bereichen vorgenommen werden kann, deren Qualität leicht geprüft werden kann. Auch ist das Kleben ein Standardfügeprozess. Des Weiteren können Metallgewebe aus Edelstahl zum Einsatz gelangen, die hohe Festigkeiten besitzen und zudem unempfindlich gegenüber Korrosion sind.

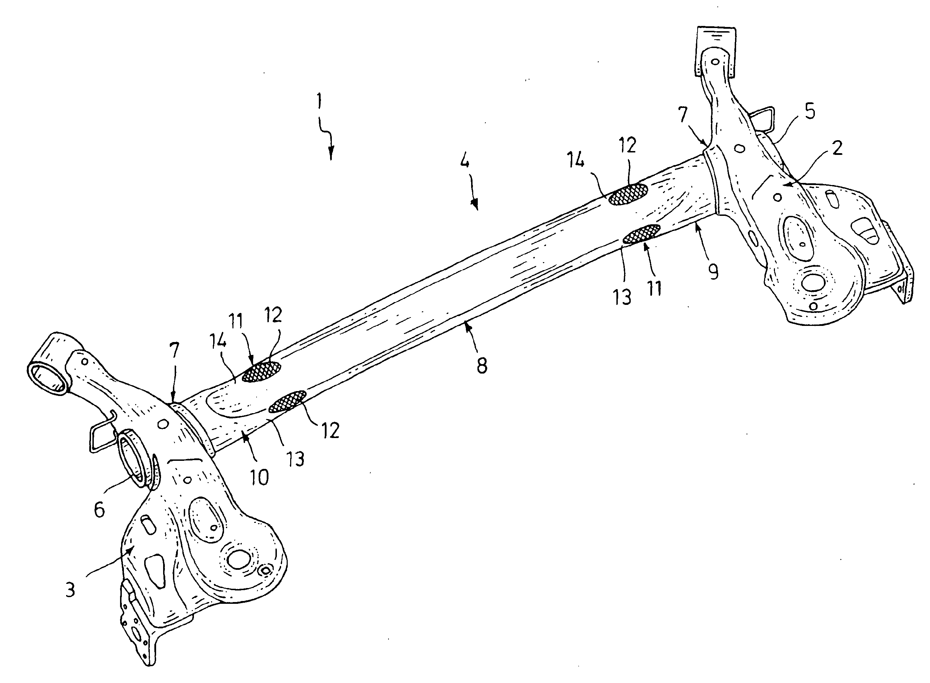

Die Erfindung ist nachfolgend an einem Ausführungsbeispiel erläutert. Die beigefügte Abbildung zeigt in perspektivischer Darstellungsweise eine Achskomponente in Form einer Verbundlenkerachse 1.

Die Verbundlenkerachse 1 besteht aus mehreren miteinander verbundenen Metallbauteilen, nämlich im Wesentlichen aus zwei seitlichen radführenden Längslenkern 2, 3 und einem Querträger 4.

Der Querträger 4 ist mit seinen im Querschnitt kreisrunden Endabschnitten 5, 6 durch Aufnahme 7 in den Längslenkern 2, 3 durchgesteckt und dort beidseitig gefügt. In seinem mittleren Bereich weist der Querträger 4 einen gemuldeten doppelwandigen Torsionsabschnitt 8 auf mit einem im Wesentlichen V- oder U-förmigen Profil. Das V- bzw. U-Profil im Torsionsabschnitt 8 ist durch Umformen eines ursprünglich kreisrunden Rohres entstanden. Die beiden Endabschnitte 5, 6 des Querträgers 4 besitzen den ursprünglichen kreisrunden Querschnitt. Von den Endabschnitten 5, 6 geht der kreisrunde Querschnitt über Übergangsabschnitte 9, 10 kontinuierlich in den gemuldeten Querschnitt über, der sich über den mittleren Torsionsabschnitt 8 des Querträgers 4 erstreckt.

Zur Erhöhung der Dauerfestigkeit in gefährdeten Bereichen ist der Querträger 4 mit einer partiellen Verstärkung 11 aus einem Metallgewebe 12 versehen. Man erkennt, dass je eine Verstärkung 11 an den beiden Schenkeln 13, 14 eines Übergangsabschnitts 9 bzw. 10 gefügt ist. Hier liegen gefährdete Zonen, da in diesen Bereichen unter der betrieblichen Belastung eine Überlagerung von Torsions- bzw. Schubspannungen und Biegespannungen auftritt. Durch die partiellen Verstärkungen 11 in diesen Bereichen erhält der Querträger 4 ein belastungsgerechtes Profil.

Das Metallgewebe 12 ist auf den Querträger 4 vollflächig verklebt oder punktschweißverklebt. Das Metallgewebe 12 besteht aus Stahldraht mit einer Dicke zwischen 0,09 mm und 1,2 mm bei einer Maschenweite von 0,14 mm bis 5,15 mm, wobei die jeweilige Drahtdicke und die Maschenweite in Anpassung auf den Anwendungsfall und der dort vorliegenden gekrümmten Flächen erfolgt.

### Bezugszeichen:

- 1 -: Verbundlenkerachse
- 2 -: Längslenker
- 3 -: Längslenker
- 4 -: Querträger
- 5 -: Endabschnitt v. 4
- 6 -: Endabschnitt v. 4
- 7 -: Aufnahme
- 8 -: Torsionsabschnitt v. 4
- 9 -: Übergangsabschnitt v. 4
- 10 -: Übergangsabschnitt v. 4
- 11 -: Verstärkung
- 12 -: Metallgewebe
- 13 -: Schenkel
- 14 -: Schenkel

## Patentansprüche

1. Achskomponente für ein Kraftfahrzeug bestehend aus mehreren miteinander verbundenen Metallbauteilen, **dadurch gekennzeichnet, dass** zumindest ein Metallbauteil (4) mit einer partiellen Verstärkung aus einem Metallgewebe (12) versehen ist.

2. Achskomponente nach Anspruch 1, **dadurch gekennzeichnet, dass** das Metallgewebe (12) auf das Metallbauteil (4) geklebt ist.

3. Achskomponente nach Anspruch 1 oder 2, **dadurch gekennzeichnet, dass** das Metallgewebe (12) mit dem Metallbauteil (4) mittels Punktschweißkleben gefügt ist.

4. Achskomponente nach einem der Ansprüche 1 bis 3, **dadurch gekennzeichnet, dass** das Metallgewebe (12) aus Draht besteht, wobei der Draht eine Dicke zwischen 0,09 mm und 1,2 mm aufweist.

5. Achskomponente nach einem der Ansprüche 1 bis 4, **dadurch gekennzeichnet, dass** das Metallgewebe (12) eine Maschenweite zwischen 0,14 mm und 5,15 mm besitzt.

6. Achskomponente nach einem der Ansprüche 1 bis 4, **dadurch gekennzeichnet, dass** das Metallbauteil (4) Bestandteil einer Verbundlenker- oder Mehrlenkerachse ist.

7. Achskomponente nach einem der Ansprüche 1 bis 4, **dadurch gekennzeichnet, dass** das Metallbauteil Bestandteil eines Hilfsrahmens ist.

## Claims

1. Axle component for a motor vehicle comprising a plurality of metal components which are connected to one another, **characterized in that** at least one metal component (4) is provided with a partial reinforcement comprising a metal fabric (12).

2. Axle component according to Claim 1, **characterized in that** the metal fabric (12) is adhesively bonded onto the metal component (4).

3. Axle component according to Claim 1 or 2, **characterized in that** the metal fabric (12) is joined to the metal component (4) by means of spot weld-bonding.

4. Axle component according to one of Claims 1 to 3, **characterized in that** the metal fabric (12) consists of wire, the wire having a thickness between 0.09 mm and 1.2 mm.

5. Axle component according to one of Claims 1 to 4, **characterized in that** the metal fabric (12) has a mesh width between 0.14 mm and 5.15 mm.

6. Axle component according to one of Claims 1 to 4, **characterized in that** the metal component (4) is a constituent part of a composite-link axle or multi-link axle.

7. Axle component according to one of Claims 1 to 4, **characterized in that** the metal component is a constituent part of a subframe.

## Revendications

1. Pièce structurelle d'essieu destinée à un véhicule automobile et comprenant plusieurs éléments constitutifs métalliques reliés entre eux, **caractérisée par le fait qu'**au moins un élément constitutif métallique (4) est muni d'un renfort partiel en un tressage métallique (12).

2. Pièce structurelle d'essieu, selon la revendication 1, **caractérisée par le fait que** le tressage métallique (12) est collé sur l'élément constitutif métallique (4).

3. Pièce structurelle d'essieu, selon la revendication 1 ou 2, **caractérisée par le fait que** le tressage métallique (12) est assemblé à l'élément constitutif métallique (4) par soudage ponctuel.

4. Pièce structurelle d'essieu, selon l'une des revendications 1 à 3, **caractérisée par le fait que** le tressage métallique (12) consiste en du fil métallique, ledit fil métallique présentant une épaisseur comprise entre 0,09 mm et 1,2 mm.

5. Pièce structurelle d'essieu, selon l'une des revendications 1 à 4, **caractérisée par le fait que** le tressage métallique (12) possède une largeur de mailles comprise entre 0,14 mm et 5,15 mm.

6. Pièce structurelle d'essieu, selon l'une des revendications 1 à 4, **caractérisée par le fait que** l'élément constitutif métallique (4) fait partie intégrante d'un bras oscillant composite ou d'un essieu à plusieurs bras oscillants.

7. Pièce structurelle d'essieu, selon l'une des revendications 1 à 4, **caractérisée par le fait que** l'élément constitutif métallique fait partie intégrante d'un cadre auxiliaire.
